# EUROPÄISCHE PATENTSCHRIFT

(11) **EP 0 990 302 B1**
(45) Veröffentlichungstag und Bekanntmachung des Hinweises auf die Patenterteilung: **13.09.2006**
(21) Anmeldenummer: 98936114.2
(22) Anmeldetag: 08.06.1998
(51) Int. Cl.: H02P 6/00, H02P 7/29, H02P 6/14

(54) **ELEKTRONISCH KOMMUTIERTER MOTOR**
ELECTRONICALLY COMMUTATED MOTOR
MOTEUR A COMMUTATION ELECTRONIQUE

(30) Priorität: 17.06.1997 DE 19725521
(43) Veröffentlichungstag der Anmeldung: 05.04.2000
(73) Patentinhaber: ROBERT BOSCH GMBH, 70442 Stuttgart (DE)
(72) Erfinder: BERNAUER, Christof, D-76596 Forbach (DE); KRAUTH, Wolfgang, D-77855 Achern-Sasbachried (DE)
(86) Internationale Anmeldenummer: PCT/DE1998/001558
(87) Internationale Veröffentlichungsnummer: WO 1998/058442

(56) Entgegenhaltungen:
- EP-A- 0 483 894
- WO-A-96/01521
- PATENT ABSTRACTS OF JAPAN vol. 096, no. 003, 29. März 1996 & JP 07 300011 A (CALSONIC CORP), 14. November 1995

## Beschreibung

Die Erfindung betrifft einen elektronisch kommutierten Motor mit einem mehrere Wicklungsstränge tragenden Stator und einem Rotor, bei dem die Ansteuerung der einzelnen Wicklungsstränge über Leistungsendstufen in zeitlich versetzten Perioden erfolgt.

Ein derartiger elektronisch kommutierter Motor ist in der WO-A-9 601 521 angegeben. Bei diesem bekannten Motor ist vorgesehen, die Wicklungsstränge in Abhängigkeit von der Geschwindigkeit mittels Pulsweitenmodulation und andauernder Strombeaufschlagung der Wicklungsstränge anzusteuern. Bei höheren Geschwindigkeitsstufen erfolgt eine Vorverlagerung der Ansteuerphase auf der Basis eines Rotor-Stellungssignals, wobei sich die Vorverlagerung des Phasenwinkels nach der Motorgeschwindigkeit richtet und entsprechende Kurvenverläufe in der Ansteuerschaltung abgelegt sind.

Bei weiteren bekannten elektronisch kommutierten Motoren dieser Art erfolgt die Beeinflussung der Motorabgabeleistung durch das Takten der Leistungsendstufen mittels Pulsweitenmodulation oder durch Variation der Einschaltdauer der Leistungsendstufen. Üblicherweise wird dabei der Strom über den gesamten Zeitraum der Ansteuerung getaktet oder in der Einschaltdauer verändert. Dies führt bei hohen Motorströmen zu hohen Schaltverlusten, welche etwa quadratisch mit dem Strom zunehmen. Diese hohen Schaltverluste verringern den Motorwirkungsgrad und bringen andererseits eine erhebliche thermische Belastung für die Leistungsendstufen, die häufig auch zum Ausfall des verwendeten elektronischen Schaltelementes der Leistungsendstufen führen kann.

In der EP 0 483 894 A1 ist eine Ansteuerschaltung für einen Elektromotor mit Pulsweitenmodulation gezeigt, wobei eine Trägerfrequenz bei kleinen Lastströmen relativ hoch und bei hohen Lastströmen relativ niedrig gewählt wird.

Auch bei einer in der JP 07 300011 A offenbarten Ansteuerschaltung für einen Elektromotor ist eine Pulsweitenmodulation vorgesehen. Bei hohem Tastverhältnis wird ein Schalter dauernd durchschaltet.

Es ist Aufgabe der Erfindung, für einen elektronisch kommutierten Motor die Ansteuerung der Leistungsendstufen so zu verbessern, dass gerade bei hohen Motorströmen hohe Schaltverluste und damit eine erhöhte Belastung der Leistungsendstufen vermieden werden kann.

Diese Aufgabe wird mit der Merkmalskombination des Anspruchs 1 und des Anspruchs 2 gelöst.

Bei dieser Ausgestaltung wird die Pulsweitenmodulation nur im Anfangszeitabschnitt oder dem Endzeitabschnitt der Ansteuerzeit durchgeführt, und zwar mit einer bei zunehmendem Motorstrom zunehmenden Pulsweite. Bei hohen Motorströmen wird an den Anfangszeitabschnitt oder den Endzeitabschnitt eine zusätzliche Einschaltdauer angehängt, die mit zunehmendem Motorstrom vergrößert wird und schließlich den gesamten Endzeitabschnitt oder Anfangszeitabschnitt umfassen kann. Dabei ist während des Anfangs- oder Endzeitabschnittes und während der zusätzlichen Einschaltdauer die Leistungsendstufe vollständig durchgeschaltet, um Schaltverluste zu vermeiden.

Die beiden Betriebsarten kleiner und hoher Strom lassen sich dabei am einfachsten dadurch trennen, dass die Bereiche mit kleinen und hohen Motorströmen durch Vorgabe eines bestimmten Stromwertes unterschieden sind, wobei mit zunehmendem kleinem Strom die Pulsweite erhöht und mit zunehmendem hohem Strom die Einschaltdauer vergrößert wird.

Bevorzugte Ausgestaltungen der Erfindung sind in den abhängigen Ansprüchen angegeben. Ist nach einer Ausgestaltung vorgesehen, dass sich die Ansteuerzeiten der Perioden für die Leistungsendstufen mit ihren Anfangszeitabschnitten zum Teil überlappen und nur in den nichtüberlappenden Teilabschnitten getaktet werden, dann überlappen sich die einzelnen Wicklungströme nicht und im Gesamtstrom tritt keine Lücke auf, wenn bei hohen Strömen dafür Sorge getragen ist, dass sich die Einschaltdauer unmittelbar an den Anfangszeitabschnitt anschließt und sich mehr oder weniger über den Endzeitabschnitt erstreckt.

Vorzugsweise werden die Ansteuerzeit und die Pausenzeit in den Perioden gleich groß gewählt, während sich die Ansteuerzeit über etwa 2/3 der Periode erstreckt.

Die Taktfrequenz für die Pulsweitenmodulation wird über dem Hörbereich des Menschen, z.B. 20 kHz, gewählt.

Die Vergrößerung der Ansteuerzeit wird dadurch vorgenommen, dass sich die Einschaltdauer unmittelbar an den Anfangszeitabschnitt anschließt und sich mehr oder weniger über den Endzeitabschnitt erstreckt oder dass sich die Einschaltdauer mehr oder weniger in den zugeordneten Anfangszeitabschnitt der Periode erstreckt.

Die Ansteuerschaltung mit den so angesteuerten Leistungsendstufen kann nicht nur für einen elektronisch kommutierten Motor eingesetzt werden, es lassen sich damit auch andere Verbraucher mit entsprechend reduzierten Schaltverlusten und erhöhtem Wirkungsgrad steuern und regeln.

Die Erfindung wird anhand eines in den Zeichnungen dargestellten Ausführungsbeispieles näher erläutert. Es zeigen:
- Fig. 1: ein Zeitdiagramm der Ansteuerung mit den verwendeten Bezeichnungen,
- Fig. 2: das Zeitdiagramm einer Ansteuerung mit Pulsweitenmodulation,
- Fig. 3: das Ansteuerdiagramm für vier Leistungsendstufen zum Ansteuern von vier Wicklungssträngen eines elektronisch kommutierten Motors,
- Fig. 4: die dazugehörige Ansteuerschaltung und
- Fig. 5: das Leistungsschaltbild der bekannten und erfindungsgemäßen Ansteuerschaltungen.

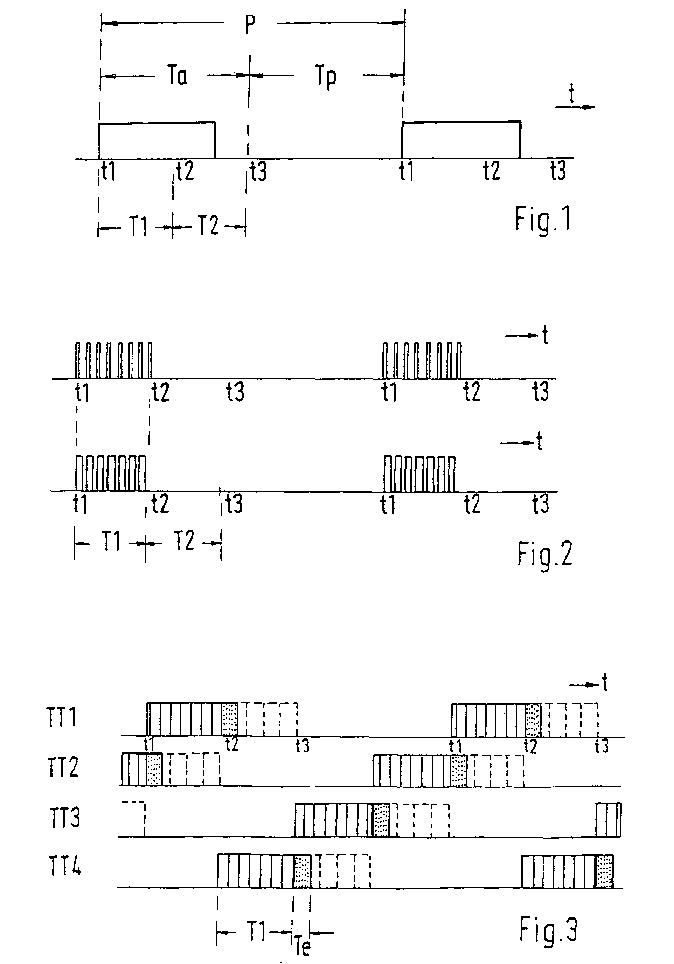

Wie die Fig. 1 zeigt, werden die Leistungsendstufen periodisch angesteuert, wobei die Periode P eine Ansteuerzeit Ta und eine Pausenzeit Tp umfaßt. Im gezeigten Ausführungsbeispiel sind die Ansteuerzeit Ta und die Pausenzeit Tp gleich groß. Die Ansteuerzeit Ta selbst ist in einen Anfangszeitabschnitt T1 und einen Endzeitabschnitt T2 unterteilt. Der Anfangszeitabschnitt Ta beginnt jeweils bei einer Zeit t1 und erstreckt sich bis zu einer Zeit t2. An den Anfangszeitabschnitt Ta schließt sich der Endzeitabschnitt T2 unmittelbar an, so daß dieser von der Zeit t2 bis zur Zeit t3 reicht, die das Ende des Endzeitabschnittes T2 anzeigt.

Ist die Motorbelastung so, daß nur kleine Motorströme bis zu einem vorgegebenen Stromwert erforderlich sind, dann werden in dem Anfangszeitabschnitt T1 mittels Pulsweitenmodulation (PWM) die Leistungsendstufen getaktet, wie Fig. 2 zeigt. Dabei wird im Arbeitsbereich die Pulsweite mit zunehmendem Strom vergrößert. Der Endzeitabschnitt T2 bleibt stromlos. Übersteigt der erforderliche Strom den vorgegebenen Stromwert, dann wird im Anfangszeitabschnitt T1 vollständig durchgesteuert, und unmittelbar an die Zeit t2 schließt sich eine Einschaltdauer Te an, in der die Leistungsendstufen TT1 bis TT4 ebenfalls vollständig durchgeschaltet werden, wie Fig. 3 zeigt. Die Einschaltdauer Te nimmt mit zunehmendem Strombedarf zu, bis sie schließlich den gesamten Endzeitabschnitt T2 umfaßt. Wie aus Fig. 3 zu entnehmen ist, werden die Perioden P von z.B. 4 Leistungsendstufen TT1 bis TT4 zeitlich so versetzt, daß sich die Anfangszeitabschnitt T1 jeweils z.B. 10% überlappen. Wenn dann nur etwa 90 % der Anfangszeitabschnitte T1 mittels Pulsweitenmodulation getaktet werden, dann überlappen sich die Ströme der einzelnen Leistungsendstufen nicht, und im Gesamtstrom tritt auch keine Lücke auf. Bei anderer Anzahl von Leistungsendstufen wird in ähnlicher Weise verfahren.

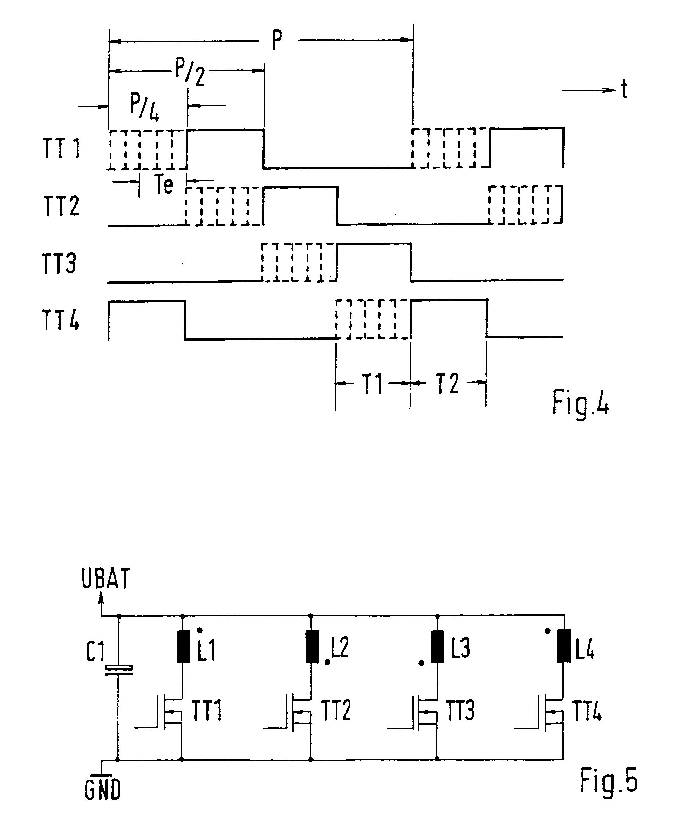

Die Anstuerung der Leistungsendstufen TT1 bis TT4 kann wie Fig. 4 zeigt, auch bei kleinen Motorströmen in den Endzeitabschnitt T2 der Ansteuerzeit mit Pulsweitenmodulation (PWM) erfolgen, wobei mit zunehmendem kleinem Motorstrom die Pulsbreite zunimmt. Wird ein vorgegebener Motorstrom erreicht, dann werden die Leistungsendstufen TT1 bis TT4 in den Endzeitschnitten T2 vollständig durchgeschaltet und mit weiter zunehmendem Motorstrom wird eine zusätzliche Einschaltdauer Te im Anfangszeitabschnitt T1 hinzugenommen, in der die Leistungsendstreifen TT1 bis TT4 ebenfalls vollständig durchgeschaltet werden. Dabei kann bei gleicher Dauer des Anfangszeitabschnitten T1 und des Endzeitabschnitten T2 mit einem Viertel der Periodendauer P die zusätzliche Einschaltdauer Te maximal ein Viertel der Periodendauer P betragen.

Die zusätzliche Einschaltdauer Te schließt sich jetzt nicht mehr an das Ende des Anfangszeitabschnittes T1, wie bei Fig. 3, sondern an den Anfang des Endzeitabschnittes T2 unmittelbar an.

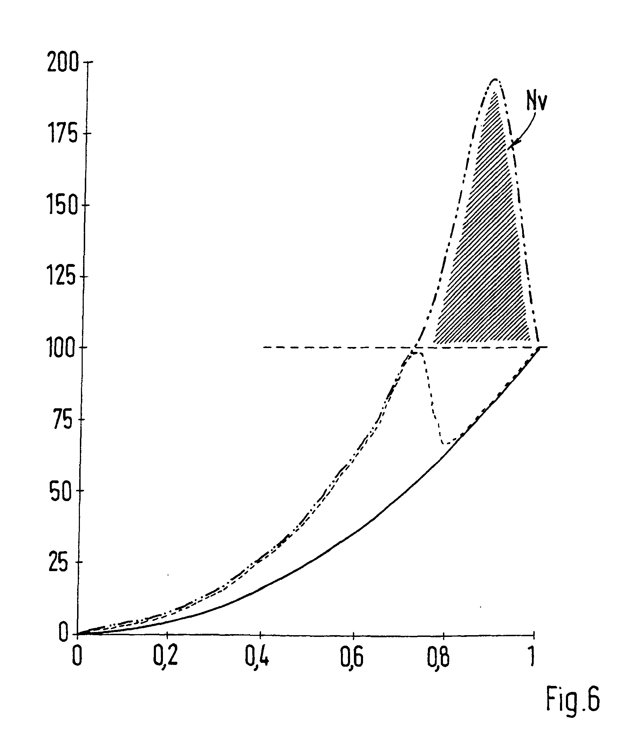

Fig. 5 zeigt eine Ansteuerschaltung für vier Leistungsendstufen TT1 bis TT4, die einen MOS-FET-Transistor aufweisen, in dessen Ausgangskreis jeweils ein Wicklungsstrang L1 bis L4 eines elektronisch kommutierten Motors angeordnet ist. Die Wicklungsstränge L1 bis L4 sind abwechselnd gegensinnig gewickelt, so daß die Stromrichtung gleich sein kann. Die Ansteuerschaltung wird von einer Batterie (GND-UBAT) gespeist, deren Spannung mit einem Kondensator C1 geglättet ist. Den vier Steuerelektroden der MOS-FET-Transistoren werden die in Fig. 3 gezeigten Ansteuerströme entsprechend zeitlich versetzt zugeführt.

In dem Diagramm nach Fig. 5 ist die Verlustleistung in einer Leistungsendstufe in Abhängigkeit von der Aussteuerung gezeigt. Dabei bedeutet der Wert 1 eine vollständige Durchschaltung der Leistungsendstufe bei Vollast und der Wert 100 bei der Verlustleistung eine Bezugsgröße, die der Ansteuerung im unbelasteten Betrieb bei Vollast entspricht, wie die voll ausgezogene Kennlinie zeigt. Wird über die gesamte Ansteuerzeit Ta mittel Pulsweitenmodulation getaktet, dann erhält man die strichpunktierte Verlustkennlinie mit einer erhöhten Verlustleistung bei hohen Strömen. Bei der erfindungsgemäßen Arbeitsweise wird schließlich die gestrichelte Kennlinie erhalten. Der mit Nv bezeichnete und schraffierte Bereich der Verlustleistung tritt bei der erfindungsgemäßen Ansteuerung gegenüber der in der gesamten Ansteuerzeit getakteten Arbeitsweise nicht auf. Damit wird die Belastung der Leistungsendstufen gerade im Bereich großer Ströme reduziert und der Wirkungsgrad des Motors erhöht. Die Kennlinie überschreitet die Verlustleistung des ungetakteten Betriebes nicht, ist bei hohen Strömen günstig und erreicht erst bei der Vollast den Verlustwert 100. Die Ansteuerschaltung nach der Erfindung kann auch zur Ansteuerung anderer Verbraucher mit gleichen Vorteilen verwendet werden.

## Patentansprüche

1. Elektronisch kommutierter Motor mit einem mehrere Wicklungsstränge tragenden Stator und einem Rotor, bei dem die Ansteuerung der einzelnen Wicklungsstränge (L1 bis L4) über Leistungsendstufen (TT1 bis TT4) in zeitlich versetzten Perioden (P) erfolgt, die in Ansteuerzeit (Ta) und Pausenzeit (Tp) unterteilt sind, bei dem die Ansteuerzeiten (Ta) in einen Anfangszeitabschnitt (T1 von t1 bis t2) und einen Endzeitabschnitt (T2 von t2 bis t3) unterteilt sind, bei dem Bereiche mit kleinen und hohen Motorströmen durch Vorgabe eines bestimmten Stromwertes unterschieden sind, bei dem bei kleinen Motorströmen die Leistungsendstufen (TT1 bis TT4) in den Anfangszeitabschnitten (T1 von t1 bis t2) nur mittels Pulsweitenmodulation (PWM) getaktet werden, wobei in den Endzeitabschnitten (T2) die Bestromung der Wicklungsstränge (L1 bis L4) abgeschaltet ist, und bei dem bei hohen Motorströmen die Leistungsendstufen (TT1 bis TT4) in den gesamten Anfangszeitabschnitten (T1) und zusätzlich in den Endzeitabschnitten (T2) mit mehr oder weniger großer Einschaltdauer (Te) vollständig durchgeschaltet werden, wobei mit zunehmendem kleinem Strom die Pulsweite erhöht wird und mit zunehmendem hohem Strom die Einschaltdauer (Te) vergrößert wird.

2. Elektronisch kommutierter Motor mit einem mehrere Wicklungsstränge tragenden Stator und einem Rotor, bei dem die Ansteuerung der einzelnen Wicklungsstränge (L1 bis L4) über Leistungsendstufen (TT1 bis TT4) in zeitlich versetzten Perioden (P) erfolgt, die in Ansteuerzeit (Ta) und Pausenzeit (Tp) unterteilt sind, bei dem die Ansteuerzeiten (Ta) in einen Anfangszeitabschnitt (T1) und einen Endzeitabschnitt (T2) unterteilt sind, bei dem Bereiche mit kleinen und hohen Motorströmen durch Vorgabe eines bestimmten Stromwertes unterschieden sind, bei dem bei kleinen Motorströmen die Leistungsendstufen (TT1, TT2, TT3, TT4) in den Endzeitabschnitten (T2) mittels Pulsweitenmodulation (PWM) getaktet werden, wobei in den Anfangszeitabschnitten (T1) die Bestromung der Wicklungsstränge abgeschaltet ist, und bei dem bei hohen Motorströmen die Leistungsendstufen (TT1, TT2, TT3, TT4) in den gesamten Endzeitabschnitten (T2) und zusätzlich in den Anfangszeitabschnitten (T2) mit mehr oder weniger großer Einschaltdauer (Te) vollständig durchgeschaltet werden, wobei mit zunehmendem kleinem Strom die Pulsweite erhöht wird und mit zunehmendem hohem Strom die Einschaltdauer (Te) vergrößert wird.

3. Elektronisch kommutierter Motor nach Anspruch 1,
**dadurch gekennzeichnet,**
**dass** sich die Ansteuerzeiten (Ta) der Perioden (P) für die Leistungsendstufen (TT1 bis TT4) mit ihren Anfangszeitabschnitten (T1) überlappen und nur in den nichtüberlappenden Teilabschnitten getaktet werden.

4. Elektronisch kommutierter Motor nach Anspruch 2,
**dadurch gekennzeichnet,**
**dass** sich die Endzeitabschnitte (T2) der Perioden (P) zeitlich unmittelbar aneinanderreihen.

5. Elektronisch kommutierter Motor nach einem der Ansprüche 1 bis 4,
**dadurch gekennzeichnet,**
**dass** die Ansteuerzeit (Ta) und die Pausenzeit (Tp) gleich groß sind.

6. Elektronisch kommutierter Motor nach einem der Ansprüche 1 bis 5,
**dadurch gekennzeichnet,**
**dass** sich die Ansteuerzeit (Ta) etwa über 2/3 der Periode (P) erstreckt.

7. Elektronisch kommutierter Motor nach einem der Ansprüche 1 bis 6,
**dadurch gekennzeichnet,**
**dass** die Taktfrequenz für die Pulsweitenmodulation (PWM) über dem Hörbereich des Menschen (z.B. 20kHz) gewählt ist.

8. Elektronisch kommutierter Motor nach Anspruch 1,
**dadurch gekennzeichnet,**
**dass** sich die Einschaltdauer (Te) unmittelbar an den Anfangszeitabschnitt (T1 von t1 bis t2) anschließt und sich mehr oder weniger über den Endzeitabschnitt (T2 von t2 bis t3) erstreckt.

9. Elektronisch kommutierter Motor nach Anspruch 2,
**dadurch gekennzeichnet,**
**dass** sich die Einschaltdauer (Te) mehr oder weniger in den zugeordneten Anfangszeitabschnitt (T1) der Periode erstreckt.

10. Elektronisch kommutierter Motor nach einem der Ansprüche 1 bis 9,
**dadurch gekennzeichnet,**
**dass** als Leistungsendstufen (TT1 bis TT4) MOS-FET-Transistoren verwendet sind.

## Claims

1. Electronically commutated motor having a stator, which has a plurality of winding phases, and a rotor, in which the individual winding phases (L1 to L4) are driven via power output stages (TT1 to TT4) in chronologically offset cycles (P) which are divided into a drive time (Ta) and pause time (Tp), in which the drive times (Ta) are divided into a start time period (T1 from t1 to t2) and an end time period (T2 from t2 to t3), in which a distinction is made between regions with low and high motor currents by prespecifying a specific current value, in which the power output stages (TT1 to TT4) are clocked in the start time periods (T1 from t1 to t2) only by means of pulse width modulation (PWM) when the motor currents are low, with the power supply to the winding phases (L1 to L4) being switched off in the end time periods (T2), and in which the power output stages (TT1 to TT4) are fully switched through in all of the start time periods (T1) and additionally in the end time periods (T2) with a switch-on period (Te) of greater or lesser magnitude when the motor currents are high, with the pulse width increasing as the low current increases, and the switch-on period (Te) becoming greater as the high current increases.

2. Electronically commutated motor having a stator, which has a plurality of winding phases, and a rotor, in which the individual winding phases (L1 to L4) are driven via power output stages (TT1 to TT4) in chronologically offset cycles (P) which are divided into a drive time (Ta) and pause time (Tp), in which the drive times (Ta) are divided into a start time period (T1) and an end time period (T2), in which a distinction is made between regions with low and high motor currents by prespecifying a specific current value, in which the power output stages (TT1, TT2, TT3, TT4) are clocked in the end time periods (T2) by means of pulse width modulation (PWM) when the motor currents are low, with the power supply to the winding phases being switched off in the start time periods (T1), and in which the power output stages (TT1, TT2, TT3, TT4) are fully switched through in all of the end time periods (T2) and additionally in the start time periods (T1) with a switch-on period (Te) of greater or lesser magnitude when the motor currents are high, with the pulse width increasing as the low current increases, and the switch-on period (Te) becoming greater as the high current increases.

3. Electronically commutated motor according to Claim 1,
**characterized**
**in that** the start time periods (T1) of the drive times (Ta) of the cycles (P) for the power output stages (TT1 to TT4) overlap, and clock pulses are supplied only in the period sections which do not overlap.

4. Electronically commutated motor according to Claim 2,
**characterized**
**in that** the end time periods (T2) of the cycles (P) are chronologically lined up one immediately after the other.

5. Electronically commutated motor according to one of Claims 1 to 4,
**characterized**
**in that** the drive time (Ta) and the pause time (Tp) are of equal length.

6. Electronically commutated motor according to one of Claims 1 to 5,
**characterized**
**in that** the drive time (Ta) runs over approximately two thirds of the cycle (P).

7. Electronically commutated motor according to one of Claims 1 to 6,
**characterized**
**in that** the clock frequency for pulse width modulation (PWM) is selected to be above the range of human hearing (for example 20 kHz).

8. Electronically commutated motor according to Claim 1,
**characterized**
**in that** the switch-on period (Te) immediately follows the start time period (T1 from t1 to t2) and runs more or less over the end time period (T2 from t2 to t3).

9. Electronically commutated motor according to Claim 2,
**characterized**
**in that** the switch-on period (Te) runs more or less into the associated start time period (T1) of the cycle.

10. Electronically commutated motor according to one of Claims 1 to 9,
**characterized**
**in that** the power output stages (TT1 to TT4) used are MOSFET transistors.

## Revendications

1. Moteur à commutation électronique comportant un stator portant plusieurs enroulements et un rotor, dont la commande des différents enroulements (L1...L4) se fait par des étages de puissance (TT1...TT4) suivant des périodes décalées dans le temps (P), subdivisées en une durée de commande (Ta) et une durée de pause (Tp), les durées de commande (Ta) étant subdivisées en un segment initial (T1 allant de t1 jusqu'à t2) et un segment final (T2 allant de t2 jusqu'à t3), distinguant des zones avec des intensités de moteur faibles et élevées par la prédéfinition d'une valeur d'intensité, pour lequel lors de petites intensités du moteur, les étages de puissance (TT1-TT4) sont commandés en cadence dans les segments initiaux (T1) compris entre (tl jusqu'à t2) seulement par modulation de largeur d'impulsion (PWM), alors que dans les segments finaux (T2) l'alimentation des enroulements (L1-L4) est coupée, et pour lequel lors d'intensités élevées dans le moteur, les étages de puissance (TT1-TT4) sont complètement dans les segments initiaux (T1) et en plus dans les segments finaux (T2) commutés avec une durée de commutation (Te) plus ou moins grande, en augmentant avec l'augmentation d'une intensité faible la largeur d'impulsion, et avec l'augmentation d'une intensité élevée la durée de commutation (Te).

2. Moteur à commutation électronique comportant un stator à plusieurs enroulements et un rotor, dont la commande des différents enroulements (L1-L4) se fait par des étages de puissance (TT1-TT4) dans des périodes (P) décalées dans le temps, subdivisées en une durée de commande (Ta) et une durée de pause (Tp), les durées de commande (Ta) étant subdivisées en un segment initial (T1) et un segment final (T2), et selon lequel on distingue des zones à faible intensité et des zones à forte intensité de courant du moteur par la prédéfinition d'une intensité, pour lequel avec de faibles intensités du moteur les étages de puissance (TT1, TT2, TT3, TT4) des segments finaux (T2) sont commandés en cadence par modulation de largeur d'impulsion (PWM) et dans les segments initiaux (T1), l'alimentation des enroulements est coupée, alors que pour de fortes intensités dans le moteur, les étages de puissance (TT1, TT2, TT3, TT4) dans l'ensemble des segments finaux (T2) et en plus dans les segments initiaux (T1) sont débloqués complètement avec une durée de commutation (Te) plus ou moins importante, en augmentant la largeur d'impulsion à mesure qu'une faible intensité augmente alors qu'avec l'augmentation d'une faible intensité on augmente la durée de branchement (Te).

3. Moteur à commutation électronique selon la revendication 1,
**caractérisé en ce que**
les durées de commande (Ta) des périodes (P) des étages de puissance (TT1-TT4) se chevauchent par leur segment de durée initiale (T1) et ne sont commandées que dans les segments partiels qui ne se chevauchent pas.

4. Moteur à commutation électronique selon la revendication 2,
**caractérisé en ce que**
les segments finaux (T2) des périodes (P) sont directement juxtaposés dans le temps.

5. Moteur à commutation électronique selon l'une des revendications 1 à 4,
**caractérisé en ce que**
la durée de commande (Ta) et la durée de pause (Tp) sont identiques.

6. Moteur à commutation électronique selon l'une des revendications 1 à 5,
**caractérisé en ce que**
la durée de commande (Ta) s'étend sur environ 2/3 de la période (P).

7. Moteur à commutation électronique selon l'une des revendications 1 à 6,
**caractérisé en ce que**
la fréquence de commutation pour la modulation de largeur d'impulsion (PWM) est choisie au-delà de la plage audible de l'homme (par exemple 20 kHz).

8. Moteur à commutation électronique selon la revendication 1,
**caractérisé en ce que**
la durée de branchement (Te) fait directement suite au segment initial (T1 allant de t1 jusqu'à t2) et s'étend plus ou moins sur le segment final (T2 allant de t2 jusqu'à t3).

9. Moteur à commutation électronique selon la revendication 2,
**caractérisé en ce que**
la durée de branchement (Te) s'étend plus ou moins sur le segment initial associé (T1) de la période.

10. Moteur à commutation électronique selon l'une des revendications 1 à 9,
**caractérisé en ce que**
les étages de puissance (TT1-TT4) sont des transistors MOS-FET.
